# EUROPÄISCHE PATENTSCHRIFT

(11) **EP 3 428 682 B1**
(45) Veröffentlichungstag und Bekanntmachung des Hinweises auf die Patenterteilung: **03.05.2023**
(21) Anmeldenummer: 18181572.1
(22) Anmeldetag: 04.07.2018
(51) Int. Cl.: G01S 15/93, G01S 7/52, G01S 15/06, G01S 15/42, G01S 15/86, G01S 15/931, G01S 13/931

(54) **VERFAHREN ZUM ERKENNEN EINES HINDERNISSES IN EINEM UMGEBUNGSBEREICH EINES KRAFTFAHRZEUGS, AUSWERTEEINRICHTUNG, FAHRERASSISTENZSYSTEM SOWIE KRAFTFAHRZEUG**
METHOD FOR DETECTING AN OBSTACLE IN THE VICINITY OF A MOTOR VEHICLE, EVALUATION UNIT, DRIVER ASSISTANCE SYSTEM AND MOTOR VEHICLE
PROCÉDÉ DE DÉTECTION D'UN OBSTACLE DANS UNE ZONE ENVIRONNANTE D'UN VÉHICULE AUTOMOBILE, DISPOSITIF D'ÉVALUATION, SYSTÈME D'AIDE À LA CONDUITE ET VÉHICULE AUTOMOBILE

(30) Priorität: 11.07.2017 DE 102017115475
(43) Veröffentlichungstag der Anmeldung: 16.01.2019
(73) Patentinhaber: Valeo Schalter und Sensoren GmbH, 74321 Bietigheim-Bissingen (DE)
(72) Erfinder: Guechai, Wael, 74321 Bietigheim-Bissingen (DE); Maraslis, Christos, 74321 Bietigheim-Bissingen (DE); Abbruzzesi, Fabio, 74321 Bietigheim-Bissingen (DE)
(74) Vertreter: Pothmann, Karsten

(56) Entgegenhaltungen:
- DE-A1-102006 060 893
- DE-A1-102011 120 535
- DE-A1-102014 111 124
- DE-A1-102015 115 012
- DE-A1-102015 122 413
- US-A1- 2005 231 341
- US-A1- 2016 010 983

## Beschreibung

Die Erfindung betrifft ein Verfahren zum Erkennen eines Hindernisses in einem Umgebungsbereich eines Kraftfahrzeugs, bei welchem von einer Auswerteeinrichtung des Kraftfahrzeugs Ultraschallsensordaten zumindest eines Ultraschallsensors des Kraftfahrzeugs und zumindest ein Kamerabild einer Kamera des Kraftfahrzeugs empfangen werden, anhand der Ultraschallsensordaten das Hindernis erkannt wird sowie eine Position des Hindernisses bestimmt wird, und das anhand der Ultraschallsensordaten erkannte Hindernis anhand des zumindest einen Kamerabildes verifiziert wird. Die Erfindung betrifft außerdem eine Auswerteeinrichtung, ein Fahrerassistenzsystem sowie ein Kraftfahrzeug.

Es ist bereits aus Stand der Technik bekannt, einen Umgebungsbereich eines Kraftfahrzeugs mittels fahrzeugseitiger Sensoreinrichtungen zu überwachen und Hindernisse in dem Umgebungsbereich zu erkennen. Bei Erkennen eines Hindernisses kann das Kraftfahrzeug beispielsweise automatisch abgebremst werden, um eine Kollision des Kraftfahrzeugs mit dem Hindernis zu vermeiden. Um dabei Hindernisse besonders zuverlässig erkennen zu können, ist es außerdem bekannt, Sensordaten verschiedener Sensoreinrichtungen miteinander zu fusionieren. So ist beispielsweise in der DE 10 2010 003 375 A1 ein Umfeldbewertungssystem beschrieben, welches Sensormittel zur Erfassung von Objekten im Umfeld eines Fahrzeugs sowie Auswertemittel zu Bewertung einer Relevanz der erkannten Objekte als Zielobjekte aufweist. Ein Steuergerät des Fahrzeugs ist derart ausgestaltet, dass Objekte durch erste Sensormittel und durch zweite Sensormittel erfassbar sind. In einer ersten Betriebsart des Steuergerätes wird ein Objekt nur dann als relevantes Zielobjekt angesehen, wenn es sowohl durch die ersten Sensormittel als auch durch die zweiten Sensormittel erfasst wird. In einer zweiten Betriebsart des Steuergerätes wird ein Objekt als relevantes Zielobjekt angesehen, wenn es nur durch die ersten Sensormittel erfasst wird.

Aus der DE 10 2012 221 766 A1 ist eine Vorrichtung aufweisend zumindest einen Ultraschallsensor und zumindest einen optischen Sensor, beispielsweise eine Kamera, bekannt, wobei die Sensoren ineinander integriert sind. Dadurch können Daten der jeweiligen Sensoren zur Validierung der Daten des jeweiligen anderen Sensors direkt miteinander verglichen werden.

In der DE 10 2015 107 391 A1 ist ein Verfahren zum Steuern einer Funktionseinrichtung eines Kraftfahrzeugs beschrieben, bei welchem mittels einer Steuereinrichtung jeweilige Sensordaten von zumindest zwei Sensoren eines Fahrerassistenzsystems des Kraftfahrzeugs empfangen werden. Die Sensoren können dabei beispielsweise Radarsensoren, Lasersensoren, Kameras, Ultraschallsensoren oder dergleichen sein. Die jeweiligen Sensordaten von zwei unterschiedlichen Sensoren können mittels der Steuereinrichtung fusioniert werden. Darüber hinaus werden zusätzlich zu den fusionierten Sensordaten mittels der Steuereinrichtung Sensorinformationsdaten bereitgestellt, welche die Sensordaten, aus denen die fusionierten Sensordaten bestimmt werden, beschreiben.

Die DE 10 2015 115012 A1 zeigt ein Verfahren zum Erzeugen einer Umgebungskarte mit Hilfe einer Kamera, die ein Bild erzeugt. Es werden ein Freiraum und ein befahrbarer Bereich mit Hilfe des Bildes bestimmt.

Die US 2016/010983 A1 beschreibt ein Verfahren zum Bereitstellen von Abstandsmessdaten, wobei Bilddaten und Abstandsmessdaten kombiniert werden, um den Abstand zu Objekten zu schätzen.

Die DE 10 2014 111124 A1 beschreibt ein Verfahren zum Erkennen eines Objekts mit Hilfe von einer Mehrzahl von Messzyklen eines Ultraschallsensors.

Die DE 10 2011 120535 A1 beschreibt ein Verfahren zum Kalibrieren zweier Sensoren.

Insbesondere bei einer Fusion von Ultraschallsensordaten eines Ultraschallsensors und Kamerasensordaten bzw. Kamerabildern einer Kamera kann es jedoch vorkommen, dass Hindernisse durch Fusionieren der Sensordaten nicht immer zwangsläufig korrekt erkannt werden können. Beispielsweise können die Hindernisse zunächst mittels der Ultraschallsensordaten detektiert bzw. erkannt werden. Eine Detektion des Hindernisses anhand von Ultraschallsensordaten kann jedoch falsch positiv sein. Dies bedeutet, dass der Ultraschallsensor das Hindernis detektiert, obwohl in dem Umgebungsbereich kein Hindernis vorhanden ist, und das Kraftfahrzeug dadurch fälschlicherweise abgebremst wird. Um dies zu verhindern, kann das anhand der Ultraschallsensordaten erkannte Hindernis verifiziert werden, indem die Ultraschallsensordaten mit den Kamerabildern fusioniert werden. Dazu können in den Kamerabildern mittels Objekterkennungsalgorithmen dreidimensionale Objekte erkannt werden. Mittels der Objekterkennungsalgorithmen können aber bestimmte Hindernisse, beispielsweise einfarbige Wände, nicht zuverlässig erkannt werden, sodass eine anhand der Ultraschallsensordaten erkannte einfarbige Wand nicht als Hindernis verifiziert wird. Das anhand der Ultraschallsensordaten erfasste Hindernis wird basierend auf den Kamerabildern fälschlicherweise als eine Falsch-Positiv-Detektion bewertet, wodurch das Kraftfahrzeug nicht abgebremst wird.

Es ist Aufgabe der vorliegenden Erfindung, eine Lösung bereitzustellen, wie Hindernisse in einem Umgebungsbereich eines Kraftfahrzeugs mittels Ultraschallsensordaten und Kamerabildern besonders zuverlässig erkannt werden können.

Diese Aufgabe wird erfindungsgemäß durch ein Verfahren, durch eine Auswerteeinrichtung, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Gemäß einer Ausführungsform eines Verfahrens zum Erkennen eines Hindernisses in einem Umgebungsbereich eines Kraftfahrzeugs werden von einer Auswerteeinrichtung des Kraftfahrzeugs insbesondere Ultraschallsensordaten zumindest eines Ultraschallsensors des Kraftfahrzeugs und zumindest ein Kamerabild zumindest einer Kamera des Kraftfahrzeugs empfangen. Anhand der Ultraschallsensordaten kann das Hindernis erkannt werden sowie eine Position des Hindernisses bestimmt werden. Das anhand der Ultraschallsensordaten erkannte Hindernis kann anhand des zumindest einen Kamerabildes verifiziert werden. Insbesondere werden ein erster Freiraum durch Auswerten des zumindest einen Kamerabildes hinsichtlich eines ersten Kriteriums und ein zweiter Freiraum durch Auswerten des zumindest einen Kamerabildes hinsichtlich eines zweiten Kriteriums bestimmt, wobei durch die Freiräume ein hindernisloser Teilbereich in dem Umgebungsbereich beschrieben wird. Ferner wird insbesondere eine erste räumliche Begrenzung des ersten Freiraums und eine zweite räumliche Begrenzung des zweiten Freiraums bestimmt und das Hindernis verifiziert, falls die erste räumliche Begrenzung, die zweite räumliche Begrenzung und die Position höchstens um einen vorbestimmten Schwellwert voneinander abweichen. Werte der ersten räumlichen Begrenzung und der zweiten räumlichen Begrenzung werden innerhalb derjenigen Teilerfassungsbereiche des Erfassungsbereichs der zumindest einen Kamera bestimmt, in welchen Detektionspunkte eines Ultraschallsensors vorhanden sind. Weiter werden die Hindernisses verifiziert, falls die erste räumliche Begrenzung und die zweite räumliche Begrenzung voneinander höchstens um einen vorbestimmten Schwellenwert und jede der ersten und zweiten Begrenzungen von der Position höchstens um den vorbestimmten Schwellwert abweichen.

Gemäß einer besonders bevorzugten Ausführungsform eines Verfahrens zum Erkennen eines Hindernisses in einem Umgebungsbereich eines Kraftfahrzeugs werden von einer Auswerteeinrichtung des Kraftfahrzeugs Ultraschallsensordaten zumindest eines Ultraschallsensors des Kraftfahrzeugs und zumindest ein Kamerabild zumindest einer Kamera des Kraftfahrzeugs empfangen. Anhand der Ultraschallsensordaten wird das Hindernis erkannt sowie eine Position des Hindernisses bestimmt. Das anhand der Ultraschallsensordaten erkannte Hindernis wird anhand des zumindest einen Kamerabildes verifiziert. Darüber hinaus werden ein erster Freiraum durch Auswerten des zumindest einen Kamerabildes hinsichtlich eines ersten Kriteriums und ein zweiter Freiraum durch Auswerten des zumindest einen Kamerabildes hinsichtlich eines zweiten Kriteriums bestimmt, wobei durch die Freiräume ein hindernisloser Teilbereich in dem Umgebungsbereich beschrieben wird. Ferner wird eine erste räumliche Begrenzung des ersten Freiraums und eine zweite räumliche Begrenzung des zweiten Freiraums bestimmt und das Hindernis verifiziert, falls die erste räumliche Begrenzung, die zweite räumliche Begrenzung und die Position höchstens um einen vorbestimmten Schwellwert voneinander abweichen.

Mittels des Verfahrens kann somit ein Fahrerassistenzsystem realisiert werden, welches den Umgebungsbereich des Kraftfahrzeugs hinsichtlich eines Vorhandenseins von verifizierten Hindernissen überwachen kann. Beispielsweise kann ein Fahrer des Kraftfahrzeugs auf die verifizierten Hindernisse in dem Umgebungsbereich gewarnt werden und/oder das Kraftfahrzeug automatisch abgebremst werden, um eine Kollision des Kraftfahrzeugs mit dem verifizierten Hindernis zu verhindern. Als ein Hindernis wird insbesondere ein Objekt in dem Umgebungsbereich des Kraftfahrzeugs definiert, welches nicht von dem Kraftfahrzeug überfahren werden kann. Wenn das Kraftfahrzeug auf das Hindernis trifft, droht insbesondere eine Beschädigung des Kraftfahrzeugs. Das Hindernis kann beispielsweise eine einfarbige Wand sein, auf welche sich das Kraftfahrzeug zubewegt. Zum Erkennen und Verifizieren des Hindernisses werden dabei Ultraschallsensordaten des zumindest einen Ultraschallsensors sowie Kamerabilder der zumindest einen Kamera des Kraftfahrzeugs von der Auswerteeinrichtung empfangen und fusioniert. Die Auswerteeinrichtung, welche beispielsweise in ein fahrzeugseitiges Steuergerät integriert sein kann, kann dazu mit dem zumindest einen Ultraschallsensor und der zumindest einen Kamera drahtgebunden und/oder drahtlos kommunizieren. Dabei werden insbesondere die Ultraschallsensordaten desjenigen Ultraschallsensors sowie die Kamerabilder derjenigen Kamera fusioniert, deren Erfassungsbereiche sich zumindest bereichsweise überlagern. Anders ausgedrückt werden diejenigen Ultraschallsensordaten sowie diejenigen Kamerabilder fusioniert, welche zumindest bereichsweise denselben Teilbereich in dem Umgebungsbereich des Kraftfahrzeugs beschreiben.

Das Hindernis wird zunächst anhand der Ultraschallsensordaten des zumindest einen Ultraschallsensors erkannt. Dazu können in den Ultraschallsensordaten Detektionspunkte, welche zu dem Hindernis korrespondieren, erkannt werden. Außerdem wird die Position bzw. eine räumliche Lage des Hindernisses relativ zum Kraftfahrzeug bestimmt. Dazu können Werte der Position für die einzelnen Detektionspunkte anhand der Ultraschallsensordaten bestimmt werden. Das erkannte Hindernis wird nun anhand des zumindest einen Kamerabildes verifiziert. Anders ausgedrückt werden die Ultraschallsensordaten des zumindest einen Ultraschallsensors basierend auf dem zumindest einen Kamerabild der zumindest einen Kamera validiert. Dies bedeutet, dass anhand des zumindest einen Kamerabildes bewertet wird, ob es sich bei der Detektion des Hindernisses anhand der Ultraschallsensordaten um eine Falsch-Positiv-Detektion oder um ein tatsächliches Hindernis handelt. Um die Falsch-Positiv-Detektion handelt es sich dann, wenn der Ultraschallsensor das Hindernis fälschlicherweise detektiert hat, obwohl kein Hindernis in dem Umgebungsbereich des Kraftfahrzeugs vorhanden ist. Anhand des zumindest einen Kamerabildes kann ein tatsächliches Vorhandensein des Hindernisses bestätigt werden oder es kann die Falsch-Positiv-Detektion des zumindest einen Ultraschallsensors erkannt werden.

Zum Verifizieren des erkannten Hindernisses anhand des zumindest einen Kamerabildes werden die zwei Freiräume in dem zumindest einen Kamerabild erkannt. Durch die Freiräume wird ein Teilbereich in dem Umgebungsbereich beschrieben, in welchem kein Hindernis vorhanden ist. Zum Erkennen dieses hindernislosen Teilbereiches in dem Umgebungsbereich wird das zumindest eine Kamerabild hinsichtlich unterschiedlicher Kriterien ausgewertet. Durch die Auswertung des zumindest einen Kamerabildes hinsichtlich unterschiedlicher Kriterien werden somit unterschiedliche Methoden zur Freiraumbestimmung bereitgestellt. Beispielsweise können zwei unterschiedliche Bildparameter von Bildpunkten innerhalb des zumindest einen Kamerabildes bestimmt werden. Als das erste Kriterium kann beispielsweise ein erster Wertebereich für einen ersten Bildparameter vorgegeben werden, und Bildpunkte, deren Werte des ersten Bildparameters in dem ersten Wertebereich liegen, können als zu dem ersten Freiraum gehörig identifiziert werden. Der erste Bildparameter kann beispielsweise eine Höheninformation von Objekten in dem Umgebungsbereich betreffen. Beispielsweise kann anhand der Höheninformation der zu einem Objekt gehörigen Bildpunkte überprüft werden, ob eine Höhe des Objektes innerhalb des ersten Wertebereiches liegt. Der erste Wertebereich kann dabei durch zwei Höhenwerte, beispielsweise 0 cm und 10 cm, begrenzt sein. Wenn die Höhe des Objektes innerhalb des durch die Höhenwerte begrenzten, ersten Wertebereiches liegt, so können die mit dem Objekt korrespondierenden Bildpunkte dem ersten Freiraum zugeordnet werden.

Als das zweite Kriterium kann beispielsweise ein zweiter Wertebereich für einen zweiten Bildparameter vorgegeben werden, und Bildpunkte, deren Werte des zweiten Bildparameters in dem zweiten Wertebereich liegen, können als zu dem zweiten Freiraum gehörig identifiziert werden. Der zweite Bildparameter kann beispielsweise eine Intensitätsinformation der Kamerabilder betreffen. Beispielsweise kann anhand der Intensitätsinformation der Bildpunkte überprüft werden, ob eine Intensität der Bildpunkte innerhalb des zweiten Wertebereiches liegt. Der zweite Wertebereich kann dabei durch zwei Intensitätswerte begrenzt sein. Wenn die Intensität der Bilpunkte innerhalb des durch die Intensitätswerte begrenzten, zweiten Wertebereiches liegt, so können die entsprechenden Bildpunkte dem zweiten Freiraum zugeordnet werden. Dabei können Bildpunkte sowohl zu dem ersten als auch zu dem zweiten Freiraum gehören. Dies bedeutet, dass sich die Freiräume zumindest bereichsweise überlagern.

Dann werden jeweilige räumliche Begrenzungen der Freiräume anhand des zumindest einen Kamerabildes bestimmt. Die räumlichen Begrenzungen der Freiräume beschreiben die räumlichen Grenzen des hindernislosen Teilbereiches. Wenn die erste und die zweite räumliche Begrenzung höchstens um den vorbestimmten Schwellwert voneinander abweichen, so ist dies ein Indiz dafür, dass anhand der unterschiedlichen Kriterien derselbe hindernislose Teilbereich in dem Umgebungsbereich erkannt wird. Anders ausgedrückt kann anhand des Vergleichs der räumlichen Begrenzungen der beiden Freiräume überprüft werden, ob die beiden Freiräume, welche durch Auswerten des zumindest einen Bildes hinsichtlich unterschiedlicher Kriterien bestimmt werden, in etwa deckungsgleich sind und somit den denselben hindernislosen Teilbereich in dem Umgebungsbereich repräsentieren.

Außerdem werden die Begrenzungen mit der anhand der Ultraschallsensordaten bestimmten Position des Hindernisses verglichen. Dazu können die Begrenzungen sowie die Position in ein gemeinsames Koordinatensystem, beispielsweise ein Koordinatensystem einer den Umgebungsbereich des Kraftfahrzeugs beschreibenden Umfeldkarte, überführt und miteinander verglichen werden. Wenn die beiden Begrenzungen höchstens um den vorbestimmten Schwellwert voneinander und von der Position abweichen, so ist dies ein Indiz dafür, dass der durch die Freiräume beschriebene hindernislose Teilbereich den Teilbereich zwischen dem Kraftfahrzeug und dem anhand der Ultraschallsensordaten erfassten Hindernis repräsentiert. Insbesondere wird als der Schwellwert ein Wert zwischen 25 cm und 35 cm, insbesondere 30 cm, bestimmt. Falls sich nun die Begrenzungen sowie die Position innerhalb eines von dem Schwellwert abhängigen Toleranzbereiches befinden, so wird das Hindernis verifiziert und als ein tatsächliches Hindernis in dem Umgebungsbereich erkannt. Falls die Begrenzungswerte sowie die Position außerhalb des Toleranzbereiches liegen, so wird das anhand der Ultraschallsensordaten erfasste Hindernis als eine Falsch-Positiv-Detektion bewertet.

Der Erfindung liegt die Erkenntnis zugrunde, dass insbesondere Hindernisse in Form von einfarbigen, beispielsweise weißen, Wänden, anhand des zumindest einen Kamerabildes nicht zuverlässig erkannt werden können, insbesondere wenn das zumindest eine Kamerabild nur mittels Objekterkennungsalgorithmen ausgewertet wird. Um nun sowohl Falsch-Positiv-Detektionen des zumindest einen Ultraschallsensors als auch eine Falsifizierung eines tatsächlichen Hindernisses anhand des zumindest einen Kamerabildes zu verhindern, wird das zumindest eine Kamerabild hinsichtlich der zwei Kriterien ausgewertet und die zwei Freiräume werden bestimmt. Anhand der Freiräume sowie anhand der Ultraschallsensordaten kann dann das Hindernis mit hoher Genauigkeit und Zuverlässigkeit erkannt werden. Somit kann ein besonders zuverlässiges Fahrerassistenzsystem zur Überwachung des Umgebungsbereiches bereitgestellt werden.

Dabei kann vorgesehen sein, dass in dem zumindest einen Kamerabild ein erster mit dem Kraftfahrzeug befahrbarer Bereich bestimmt wird, anhand dessen der erste Freiraum bestimmt wird, und ein zweiter mit dem Kraftfahrzeug befahrbarer Bereich in dem zumindest einen Kamerabild bestimmt wird, anhand dessen der zweite Freiraum bestimmt wird. Bei bekannten Verfahren aus dem Stand der Technik werden beispielsweise mit Hilfe von entsprechenden Objekterkennungsalgorithmen Hindernisse in dem Umgebungsbereich des Kraftfahrzeugs erkannt. Dabei kann es aber der Fall sein, dass die Hindernisse mit Hilfe von Objekterkennungsalgorithmen nicht zuverlässig oder nicht erkannt werden können. Der vorliegenden Ausführungsform liegt die Erkenntnis zugrunde, dass eine derartige fehlerhafte Erkennung von Hindernissen dadurch verhindert werden kann, dass anhand des zumindest einen Kamerabildes derjenige Bereich in dem Umgebungsbereich des Kraftfahrzeugs ermittelt wird, der mit dem Kraftfahrzeug befahren werden kann. Hierbei werden die Freiräume also insbesondere nicht basierend auf einem mit Objekterkennungsalgorithmen erfassten Hindernis bestimmt. Vielmehr wird durch Auswerten des zumindest einen Kamerabildes hinsichtlich des ersten Kriteriums der erste befahrbare Bereich identifiziert und durch Auswerten des zumindest einen Kamerabildes hinsichtlich des zweiten Kriteriums der zweite befahrbare Bereich identifiziert. Grenzen der befahrbaren Bereiche repräsentieren die räumlichen Begrenzungen der Freiräume. Somit kann zuverlässig eine aus der Verwendung eines Objekterkennungsalgorithmus resultierende, fehlerhafte Erkennung eines Hindernisses oder ein Nicht-Erkennen eines Hindernisses in dem zumindest einen Kamerabild verhindert werden.

In einer Weiterbildung der Erfindung wird als der erste mit dem Kraftfahrzeug befahrbare Bereich ein Bodenbereich des Umgebungsbereiches in dem zumindest einen Kamerabild erkannt und als die erste räumliche Begrenzung wird eine Grenze des Bodenbereiches in dem zumindest einen Kamerabild erkannt. Eine erste Methode zur Freiraumbestimmung umfasst also das Erkennen des Bodenbereiches in dem zumindest einen Kamerabild. Der erste Freiraum ist hier ein sogenannter Boden-Freiraum ("ground free space"). Dabei kann es vorgesehen sein, dass der Bodenbereich eine Straße für das Kraftfahrzeug umfasst. Der Bodenbereich kann auch einen Bereich neben der Straße beschreiben, der mit dem Kraftfahrzeug befahren werden kann. Beispielsweise kann der Bodenbereich einer Parkfläche, die separat zur Straße ausgebildet ist, zugeordnet sein. In dem Bereich, der als Bodenbereich erkannt wird, sind keine Hindernisse für das Kraftfahrzeug angeordnet. Mit anderen Worten befinden sich in dem Bereich, der als Bodenbereich erkannt wird, keine Objekte, welche ein Hindernis für das Kraftfahrzeug darstellen.

Bevorzugt wird der Bodenbereich erkannt, indem Objekte in dem zumindest einen Kamerabild bestimmt werden, eine jeweilige Höhe der Objekte in dem zumindest einen Kamerabild bestimmt wird und als das erste Kriterium diejenigen Objekte dem Bodenbereich zugeordnet werden, deren Höhe einen vorbestimmten Höhen-Schwellwert unterschreitet. Hierzu kann beispielsweise ein entsprechender dreidimensionaler Objekterkennungsalgorithmus auf das zumindest eine Kamerabild angewandt werden. Bei üblicherweise verwendeten Objekterkennungsalgorithmen werden Objekte, deren Höhe den vorbestimmten Höhen-Schwellwert unterschreitet, nicht berücksichtigt. Dieser vorbestimmte Höhen-Schwellwert kann beispielsweise einen Wert zwischen 10 cm und 25 cm betragen und entspricht insbesondere einer Grenze des ersten Wertebereiches. Bei den üblicherweise verwendeten Objekterkennungsalgorithmen werden diese Objekte, deren Höhe den Höhen-Schwellwert unterschreitet, aussortiert bzw. nicht berücksichtigt. Diese Objekte werden nun herangezogen, um den Bodenbereich in dem zumindest einen Kamerabild zu erkennen. Somit kann auf einfache und zuverlässige Weise der Bodenbereich in dem Umgebungsbereich des Kraftfahrzeugs als der erste befahrbare Bereich erkannt werden und der erste Freiraum basierend auf dem ersten befahrbaren Bereich bestimmt werden.

Gemäß einer weiteren Ausführungsform der Erfindung wird als der zweite mit dem Kraftfahrzeug befahrbare Bereich ein Straßenbereich des Umgebungsbereiches in dem zumindest einen Kamerabild erkannt und als die zweite räumliche Begrenzung wird eine Grenze des Straßenbereiches in dem zumindest einen Kamerabild erkannt. Eine zweite Methode zur Freiraumbestimmung umfasst also das Erkennen des Straßenbereiches in dem zumindest einen Kamerabild. Hierzu kann das zumindest eine Kamerabild mit Hilfe der Auswerteeinrichtung entsprechend ausgewertet werden und die räumlichen Grenzen bzw. die räumliche Erstreckung des Straßenbereiches in dem zumindest einen Kamerabild erkannt werden. Anhand der Grenzen des Straßenbereiches kann dann die zweite räumliche Begrenzung des zweiten Freiraums bestimmt werden.

Vorzugsweise wird zum Erkennen des Straßenbereiches das zumindest eine Kamerabild durch Einteilen des zumindest einen Kamerabildes in mehrere Kamerabildblöcke segmentiert, eine Intensität wird in jedem der Kamerabildblöcke bestimmt und als das zweite Kriterium werden die Kamerabildblöcke anhand der bestimmten Intensität als Straßenbereich klassifiziert. Der zweite Freiraum ist somit ein sogenannter Segmentierungs-Freiraum ("segmentation free space"). Unter dem Begriff Segmentierung ist insbesondere das Erzeugen von inhaltlich zusammenhängenden Regionen bzw. Bereichen durch Zusammenfassen benachbarter Bildpunkte entsprechend eines bestimmten Homogenitätskriteriums zu verstehen. Hierzu können beispielsweise in dem zumindest einen Kamerabild einzelne Bildpunkte mit ihren Nachbarbildpunkten verglichen werden und zu einer Region zusammengefasst werden, falls diese ähnlich sind. Vorliegend wird das zumindest eine Kamerabild in eine Mehrzahl von Kamerabildblöcken eingeteilt. Diese Kamerabildblöcke können beispielsweise in mehreren Zeilen und mehreren Spalten angeordnet sein. Für jeden der Kamerabildblöcke wird eine Intensität bestimmt. Insbesondere kann eine Variation der Intensität der jeweiligen Kamerabildblöcke bestimmt werden. Weiterhin kann es vorgesehen sein, dass diejenigen Kamerabildblöcke, deren Variation der Intensität einen vorbestimmten Variations-Schwellenwert unterschreitet, ausgewählt werden. Somit können diejenigen Kamerabildblöcke ausgewählt werden, bei denen die Bildpunkte eine im Wesentlichen homogene Verteilung zueinander aufweisen.

Diese ausgewählten Kamerabildblöcke können dann bezüglich ihrer absoluten Intensität bzw. Helligkeit unterschieden werden und somit Objekten in der realen Welt in dem Umgebungsbereich des Kraftfahrzeugs zugeordnet werden. Dabei kann die jeweilige Helligkeit der ausgewählten Kamerabildblöcke mit einem Intensitäts-Schwellwert verglichen werden und diejenigen Kamerabildblöcke bestimmt werden, welche einem Straßenbereich zuzuordnen sind. Der Intensitäts-Schwellwert entspricht dabei insbesondere einer Grenze des zweiten Wertebereiches. Dabei kann es auch vorgesehen sein, dass mehrere zusammenhängende Kamerabildblöcke bestimmt werden, die dem Straßenbereich zugeordnet sind. Als die Grenze des Straßenbereiches kann beispielsweise ein Übergang zwischen einem Kamerabildblock, welcher den Intensitäts-Schwellwert unterschreitet und daher dem Straßenbereich zuzuordnen ist, und einem Kamerabildblock, welcher den Intensitäts-Schwellwert überschreitet und daher nicht mehr dem Straßenbereich zuzuordnen ist. Anhand des Straßenbereiches und dessen räumlicher Grenzen können auf besonders einfache Weise der zweite Freiraum sowie dessen räumliche Begrenzungen bestimmt werden.

Es kann vorgesehen sein, dass ein Erfassungsbereich der zumindest einen Kamera in eine vorbestimmte Anzahl von Teilerfassungsbereichen eingeteilt wird, ein Vorhandensein der zwei Freiräume in jedem der Teilerfassungsbereiche überprüft wird und Werte der ersten und der zweiten Begrenzung für jeden der Teilerfassungsbereiche bestimmt werden, in welchem die zwei Freiräume vorhanden sind. Die Teilerfassungsbereiche sind insbesondere jeweils kreissegmentförmig bzw. strahlförmig ausgebildet. In jedem der strahlförmigen Teilerfassungsbereiche können dann die Werte der Begrenzungen bestimmt werden und mit einem Wert der Position einer von der Ultraschallsensorvorrichtung erfassten Detektion verglichen werden. Dabei kann der Erfassungsbereich in eine von dem zu erfassenden Freiraum abhängige Anzahl von Teilerfassungsbereichen unterteilt werden. Wenn beispielsweise der erste Freiraum bzw. der Boden-Freiraum bestimmt werden soll, so wird der Erfassungsbereich in eine erste Anzahl an Teilerfassungsbereichen unterteilt, die Werte der ersten Begrenzung werden in den jeweiligen Teilerfassungsbereichen bestimmt und mit dem Wert der Position der von der Ultraschallsensorvorrichtung erfassten Detektion verglichen. Wenn beispielsweise der zweite Freiraum bzw. der Segmentierungs-Freiraum bestimmt werden soll, so wird der Erfassungsbereich in eine zweite Anzahl an Teilerfassungsbereichen unterteilt, die Werte der zweite Begrenzung werden in den jeweiligen Teilerfassungsbereichen bestimmt und mit dem Wert der Position der von der Ultraschallsensorvorrichtung erfassten Detektion verglichen.

Es erweist sich als vorteilhaft, wenn anhand der Ultraschallsensordaten eine Länge des Hindernisses bestimmt wird und das Hindernis nur anhand der basierend auf dem zumindest einen Kamerabild bestimmten Freiräume verifiziert wird, falls die Länge einen vorbestimmten Längen-Schwellwert überschreitet. Gemäß dieser Ausführungsform wird anhand der Ultraschallsensordaten durch Bestimmen der Länge des Hindernisses bestimmt, ob es sich bei dem Hindernis um eine Wand handeln könnte. Dieser Ausführungsform liegt die Erkenntnis zugrunde, dass insbesondere einfarbige Wände nicht mittels dreidimensionaler Objekterkennungsalgorithmen in dem zumindest einen Kamerabild erkannt werden können. Wenn die Länge des Hindernisses den vorbestimmten Längen-Schwellwert überschreitet, dann wird davon ausgegangen, dass es sich bei dem Hindernis um eine Wand handelt. Dieses Hindernis in Form von der Wand wird dann anhand der zwei Freiräume verifiziert. Wenn die Länge des Hindernisses den vorbestimmten Längen-Schwellwert unterschreitet, dann wird davon ausgegangen, dass es sich bei dem Hindernis nicht um eine Wand handelt. Dieses Hindernis kann dann beispielsweise durch Bestimmung eines dritten Freiraumes verifiziert werden. Der dritte Freiraum wird beispielsweise bestimmt, indem das Hindernis in dem zumindest einen Bild mittels Objekterkennungsalgorithmen erkannt wird und die räumliche Begrenzung des dritten Freiraumes anhand des Hindernisses bestimmt wird. Durch die zusätzliche Längenbestimmung des Hindernisses weist das durch die Auswerteeinrichtung durchgeführte Verfahren eine hohe Robustheit beim Erfassen des Hindernisses auf.

Auch kann vorgesehen sein, dass das verifizierte Hindernis in eine den Umgebungsbereich des Kraftfahrzeugs beschreibende Umfeldkarte eingetragen wird. Die Umfeldkarte beschreibt den Umgebungsbereich objektbasiert. Dies bedeutet, dass Objekte bzw. Hindernisse in dem Umgebungsbereich relativ zum Kraftfahrzeug in einem Koordinatensystem der Umfeldkarte dargestellt sind. Anhand der Umfeldkarte kann das Fahrerassistenzsystem das Kraftfahrzeug beispielsweise kollisionsfrei durch den Umgebungsbereich manövrieren.

Die Erfindung betrifft außerdem eine Auswerteeinrichtung für ein Fahrerassistenzsystem eines Kraftfahrzeugs, welche dazu ausgelegt ist, ein erfindungsgemäßes Verfahren oder eine vorteilhafte Ausführung davon durchzuführen. Die Auswerteeinrichtung kann beispielsweise in ein fahrzeugseitige Steuergerät integriert sein und mit dem zumindest einen Ultraschallsensor sowie mit der zumindest einen Kamera des Kraftfahrzeugs kommunizieren.

Ferner betrifft die Erfindung ein Fahrerassistenzsystem für ein Kraftfahrzeug aufweisend zumindest einen Ultraschallsensor zum Erfassen von Ultraschallsensordaten aus einem Umgebungsbereich des Kraftfahrzeug, zumindest eine Kamera zum Erfassen von Kameradaten aus dem Umgebungsbereich und eine erfindungsgemäße Auswerteeinrichtung. Insbesondere ist das Fahrerassistenzsystem dazu ausgelegt, eine kollisionsvermeidende Maßnahme zum Vermeiden einer Kollision des Kraftfahrzeugs mit dem verifizierten Hindernis durchzuführen. Eine solche kollisionsvermeidende Maßnahme kann beispielsweise das automatische Abbremsen des Kraftfahrzeugs vor dem Hindernis sein. Alternativ oder zusätzlich kann als die kollisionsvermeidende Maßnahme ein Warnsignal, beispielsweise einen Warnton, an den Fahrer des Kraftfahrzeugs ausgegeben werden.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Auswerteeinrichtung, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

### Dabei zeigen:

- Fig. 1: eine schematische Darstellung einer Ausführungsform eines Erfindung gemessen Kraftfahrzeugs;
- Fig. 2: eine schematische Darstellung eines ersten Freiraumes relativ zum Kraftfahrzeug;
- Fig. 3: eine schematische Darstellung eines zweiten Freiraumes relativ zum Kraftfahrzeug;
- Fig. 4: eine schematische Darstellung des ersten Freiraumes beim Zufahren des Kraftfahrzeugs auf ein Hindernis; und
- Fig. 5: eine schematische Darstellung des zweiten Freiraumes beim Zufahren des Kraftfahrzeugs auf das Hindernis.

In den Figuren sind gleiche sowie funktionsgleiche Elemente mit den gleichen Bezugszeichen versehen.

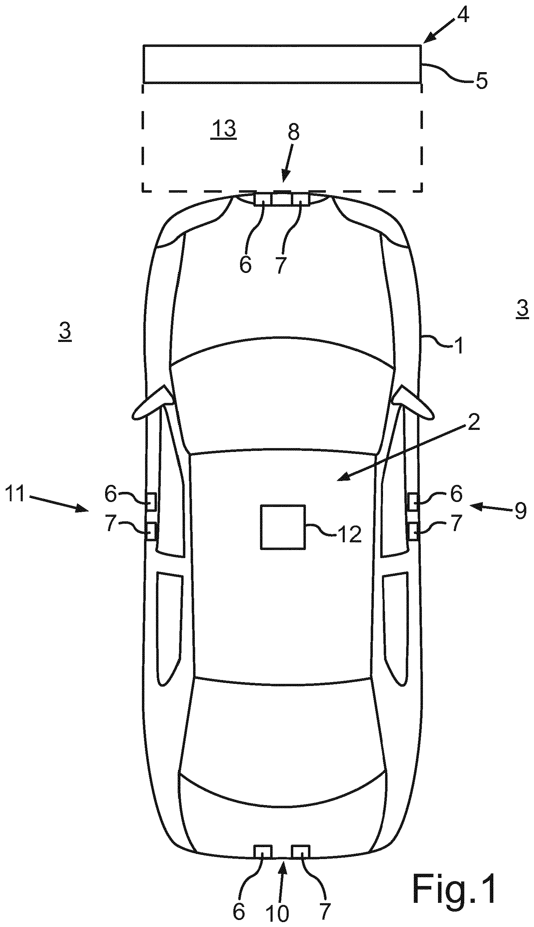

Fig. 1 zeigt ein Kraftfahrzeug 1 gemäß der vorliegenden Erfindung. Das Kraftfahrzeug 1 ist im vorliegenden Fall als ein Personenkraftwagen ausgebildet und weist ein Fahrerassistenzsystem 2 auf, welches dazu ausgelegt ist, einen Umgebungsbereich 3 des Kraftfahrzeugs 1 zu überwachen. Dazu können Hindernisse 4, beispielsweise in Form von einer einfarbigen weißen Wand 5, im Umgebungsbereich 3 des Kraftfahrzeugs 1 erkannt werden. Für die Überwachung des Umgebungsbereiches 3 weist das Fahrerassistenzsystem 2 zumindest einen Ultraschallsensor 6 zum Erfassen von Ultraschallsensordaten und zumindest eine Kamera 7 zum Erfassen von Kamerabildern auf. Im vorliegenden Fall weist das Kraftfahrzeug 1 zumindest einen Ultraschallsensor 6 und zumindest eine Kamera 7 in einem Frontbereich 8 des Kraftfahrzeugs 1 zum Überwachen des Umgebungsbereiches 3 vor dem Kraftfahrzeug 1 auf, zumindest einen Ultraschallsensor 6 und zumindest eine Kamera 7 in einem rechten Seitenbereichen 9 des Kraftfahrzeugs 1 zum Überwachen des Umgebungsbereiches 3 rechts neben dem Kraftfahrzeug 1 auf, zumindest einen Ultraschallsensor 6 und zumindest eine Kamera 7 in einem Heckbereich 10 des Kraftfahrzeugs 1 zum Überwachen des Umgebungsbereiches 3 hinter dem Kraftfahrzeug 1 auf und zumindest einen Ultraschallsensor 6 und zumindest eine Kamera 7 in einem linken Seitenbereich 11 des Kraftfahrzeugs 1 zum Überwachen des Umgebungsbereiches 3 links neben dem Kraftfahrzeug 1 auf.

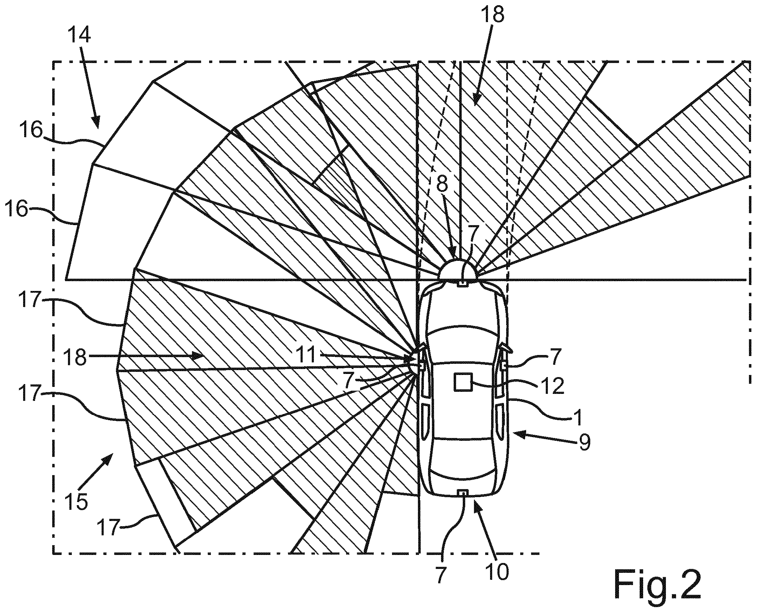

Eine Auswerteeinrichtung 12 des Fahrerassistenzsystems 2 ist dazu ausgelegt, die Ultraschallsensordaten der Ultraschallsensoren 6 sowie die Kamerabilder der Kameras 7 zu empfangen und auszuwerten. So kann die Auswerteeinrichtung 12, welche beispielsweise in ein fahrzeugseitiges Steuergerät integriert sein kann, anhand der Ultraschallsensordaten das Hindernis 4 in dem Umgebungsbereich 3 des Kraftfahrzeugs 1 erkennen sowie eine Position des Hindernisses 4 relativ zum Kraftfahrzeug 1 erfassen. Das anhand der Ultraschallsensordaten des zumindest einen Ultraschallsensor 6 erkannte Hindernis 4 kann anhand der Kamerabilder der zumindest einen Kamera 7 verifiziert werden. Dies bedeutet, dass anhand der Kamerabilder der zumindest einen Kamera 7 überprüft wird, ob es sich bei dem anhand der Ultraschallsensordaten erfassten Hindernis 4 um ein tatsächliches, reales Hindernis oder um eine Fehldetektion, eine sogenannte Falsch-Positiv-Detektion, handelt. Dazu werden anhand der Kamerabilder der zumindest einen Kamera 7 zwei Freiräume 18, 19 (siehe Fig. 2 bis Fig. 5) in dem Umgebungsbereich 3 bestimmt, welche einen hindernislosen Teilbereich 13 in dem Umgebungsbereich 3 des Kraftfahrzeugs 1 repräsentieren. Insbesondere repräsentieren die Freiräume 18, 19 Bereiche in dem Umgebungsbereich 3, welche von dem Kraftfahrzeug 1 befahrbar sind. Falls das anhand der Ultraschallsensordaten erkannte Hindernis 4 ein tatsächliches Hindernis für das Kraftfahrzeug 1 ist, so repräsentieren die Freiräume 18, 19 beide denselben hindernislosen Teilbereich 13 zwischen dem Kraftfahrzeug 1 und dem Hindernis 4. Nach Verifizieren des Hindernisses 4 kann das Fahrerassistenzsystem 2 das Kraftfahrzeug 1 beispielsweise automatisch abbremsen, um eine Kollision des Kraftfahrzeugs 1 mit dem verifizierten Hindernis 4 zu vermeiden.

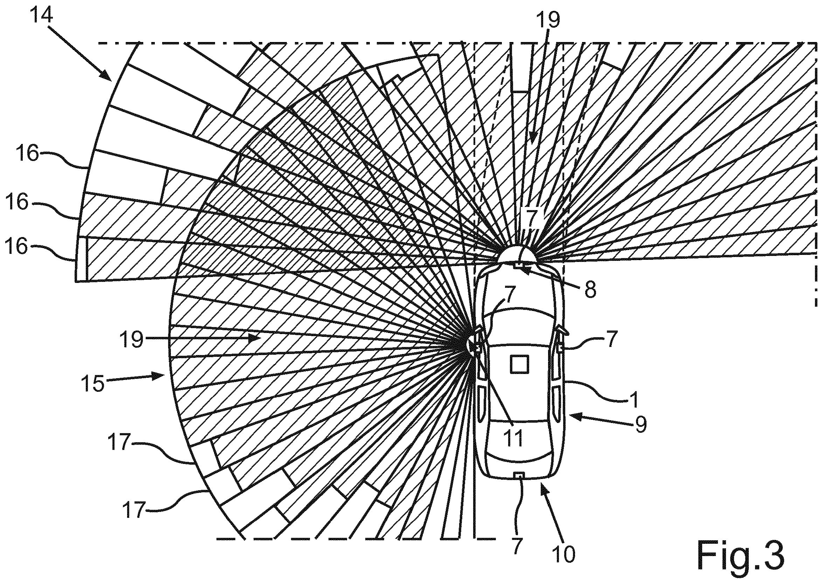

In Fig. 2 und Fig. 3 sind Erfassungsbereiche 14, 15 zweier Kameras 7 gezeigt, wobei ein erster Erfassungsbereich 14 einen Erfassungsbereich der Kamera 7 im Frontbereich 8 des Kraftfahrzeugs 1 und ein zweiter Erfassungsbereich 15 einen Erfassungsbereich der Kamera 7 im linken Bereich 11 des Kraftfahrzeugs 1 repräsentiert. Die Erfassungsbereiche 14, 15 sind in strahlförmige bzw. kreissegmentförmige Teilerfassungsbereiche 16, 17 unterteilt. Gemäß Fig. 2 repräsentieren schraffierte Bereiche in den strahlförmigen Teilerfassungsbereichen 16, 17 einen ersten Freiraum 18. Der erste Freiraum 18 wird bestimmt, indem die Kamerabilder hinsichtlich eines ersten Kriteriums ausgewertet werden. Im vorliegenden Fall ist der erste Freiraum 18 ein sogenannter Boden-Freiraum ("ground free space"), welcher einen von dem Kraftfahrzeug 1 befahrbaren Bodenbereich in dem Umgebungsbereich 3 des Kraftfahrzeugs 1 repräsentiert. Der Bodenbereich kann beispielsweise bestimmt werden, indem in den Kamerabildern der Kamera 7 Objekte mittels dreidimensionaler Objekterkennungsalgorithmen erkannt werden, jeweilige Höhen der Objekte anhand der Kamerabilder bestimmt werden und diejenigen Objekte dem Bodenbereich zugeordnet werden, deren Höhe einen vorbestimmten Höhen-Schwellwert unterschreitet.

In Fig. 3 repräsentieren die schraffierten Bereiche einen zweiten Freiraum 19, welcher bestimmt wird, indem die Kamerabilder der Kamera 7 hinsichtlich eines zweiten Kriteriums ausgewertet werden. Im vorliegenden Fall ist der zweite Freiraum 19 ein sogenannter Segmentations-Freiraum ("segmentation free space"), welcher einen von dem Kraftfahrzeug 1 befahrbaren Straßenbereich in dem Umgebungsbereich 3 des Kraftfahrzeugs 1 repräsentiert. Der zweite Freiraum 19 wird bestimmt, indem das zumindest eine Kamerabild in Kamerabildblöcke unterteilt bzw. segmentiert wird und für jeden Kamerabildblock eine Intensität bestimmt wird. Der Straßenbereich wird dabei anhand der Intensitäten der Kamerabildblöcke in dem Kamerabild bestimmt.

Beispielsweise können diejenigen Kamerabildblöcke dem Straßenbereich zugeordnet werden, deren Intensität einen vorbestimmten Intensitäts-Schwellwert unterschreitet.

Dabei kann vorgesehen sein, dass eine Anzahl an Teilerfassungsbereichen 16, 17, in welche die Erfassungsbereiche 14, 15 unterteilt werden, in Abhängigkeit von dem zu bestimmenden Freiraum 18, 19 vorgegeben wird. Bei Teilerfassungsbereichen 16, 17 gemäß Fig. 2 und Fig. 3, welche keinerlei Schraffur aufweisen, kann es sein, dass aus diesen keine Information extrahier werden kann.

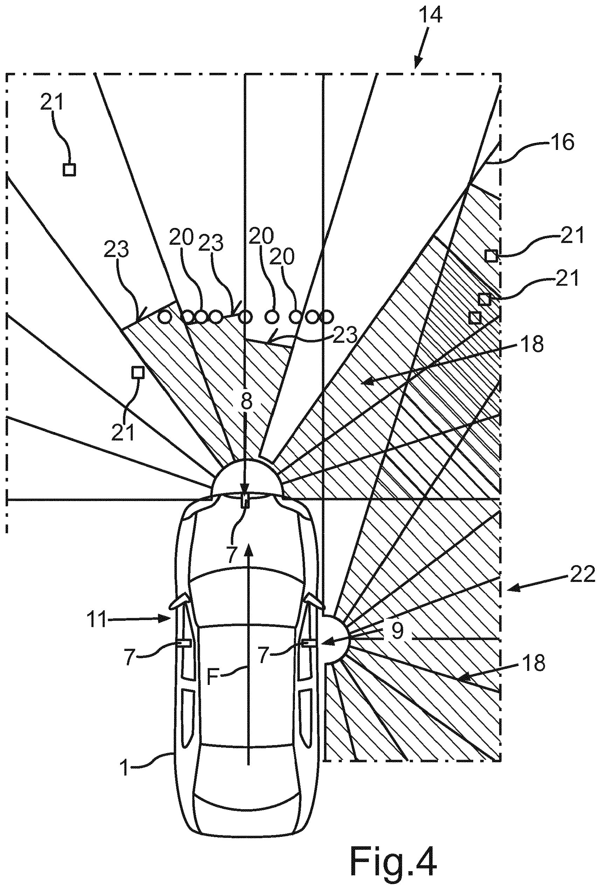

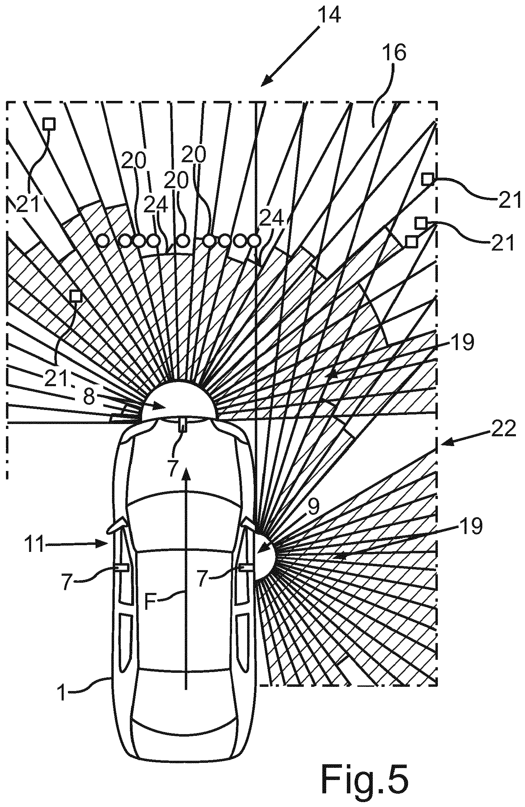

In Fig. 4 und 5 sind die ersten und zweiten Freiräume 18, 19, welche in dem Erfassungsbereich 14 der Kamera 7 in dem Frontbereich 8 des Kraftfahrzeugs 1 sowie einem Erfassungsbereich 22 der Kamera 7 im rechten Seitenbereich 9 des Kraftfahrzeugs 1 liegen, für den Fall einer Fahrt F des Kraftfahrzeugs 1 in Richtung eines Hindernisses 4 in Form einer Wand 5 gezeigt. Zusätzlich sind in Fig. 4 und Fig. 5 Detektionspunkte 20, 21 der Ultraschallsensordaten gezeigt, welche hier von dem zumindest einen Ultraschallsensor 6 in dem Frontbereich 8 des Kraftfahrzeugs 1 erfasst wurden und mit Objekten in dem Umgebungsbereich 3 korrespondieren. Hier repräsentieren die Detektionspunkte 20 die zu der Wand 5 gehörigen Detektionspunkte. Die Detektionspunkte 21 repräsentieren entweder andere, tatsächliche Hindernisse in dem Umgebungsbereich 3 des Kraftfahrzeugs 1 oder Falsch-Positiv-Detektionen des Ultraschallsensors 6. Der zumindest eine Ultraschallsensor 6 ist dazu ausgelegt, Positionswerte der Detektionspunkte 20, 21 zu bestimmen, anhand derer eine Position der Hindernisse in dem Umgebungsbereich 3 bestimmt werden kann.

Außerdem werden Werte einer ersten Begrenzung 23 des ersten Freiraumes 18 anhand der Kamerabilder der zumindest einen Kamera 7 bestimmt. Die erste Begrenzung 23 repräsentiert eine räumliche Grenze des Bodenbereiches in dem Umgebungsbereich 3. Insbesondere werden die Werte der ersten Begrenzung 23 innerhalb derjenigen Teilerfassungsbereiche 16 bestimmt, in welchen Detektionspunkte 20 des Ultraschallsensors 6 vorhanden sind. Dann werden die Werte der ersten Begrenzung 23 mit den zugehörigen Positionswerten der anhand der Ultraschallsensordaten erfassten Detektionspunkte 20 verglichen.

Ferner werden Werte einer zweiten Begrenzung 24 des zweiten Freiraumes 19 der Kamerabilder der zumindest einen Kamera 7 bestimmt. Die zweite Begrenzung 24 repräsentiert eine räumliche Grenze des Straßenbereiches in dem Umgebungsbereich 3. Insbesondere werden die Werte der zweiten Begrenzung 24 innerhalb derjenigen Teilerfassungsbereiche 16 des Erfassungsbereiches 14 bestimmt, in welchen Detektionspunkte 20 des Ultraschallsensors 6 vorhanden sind. Dann werden die Werte der zweiten Begrenzung 24 mit den Positionswerten der Detektionspunkte 20 der Ultraschallsensordaten verglichen. Wenn die jeweiligen Positionswerte der Detektionspunkte 20 sowie die Werte der ersten und zweiten Begrenzung 23, 24 höchstens um einen vorbestimmten Schwellwert voneinander abweichen, so werden der jeweilige Detektionspunkt 20 und damit das Hindernis 4 verifiziert. Beispielsweise kann das Hindernis 4 verifiziert werden, wenn eine vorbestimmte Mindestanzahl an Detektionspunkten 20 anhand der zugehörigen Werte der räumlichen Begrenzungen 23, 24 verifiziert wurde.

Auch kann vorgesehen sein, dass anhand der Detektionspunkte 20 eine Länge des Hindernisses 4 bestimmt wird. Wenn die Länge des Hindernisses 4 einen vorbestimmten Längen-Schwellwert unterschreitet, so ist dies ein Indiz dafür, dass es sich bei dem Hindernis 4 um eine Wand 5 handelt. Im Falle des Hindernisses 4 in Form von der Wand 5 kann die Verifizierung des Hindernisses 4 mittels der Bestimmung der beiden Freiräume 18, 19 in den Kamerabildern erfolgen. Andernfalls kann die Verifizierung des Hindernisses mittels eines dreidimensionalen Objekterkennungsalgorithmus anhand der Kamerabilder erfolgen.

## Patentansprüche

1. Verfahren zum Erkennen eines Hindernisses (4) in einem Umgebungsbereich (3) eines Kraftfahrzeugs (1), bei welchem von einer Auswerteeinrichtung (12) des Kraftfahrzeugs (1) folgende Schritte durchgeführt werden:
- Empfangen von Ultraschallsensordaten zumindest eines Ultraschallsensors (6) des Kraftfahrzeugs (1) und von zumindest einem Kamerabild zumindest einer Kamera (7) des Kraftfahrzeugs (1),
- Erkennen des Hindernisses (4) sowie Bestimmen einer Position des Hindernisses (4) anhand der Ultraschallsensordaten,
- Verifizieren des anhand der Ultraschallsensordaten erkannten Hindernisses (4) anhand des zumindest einen Kamerabildes,
**gekennzeichnet durch** die Schritte:
- Bestimmen eines ersten Freiraumes (18) durch Auswerten des zumindest einen Kamerabildes hinsichtlich eines ersten Kriteriums und Bestimmen eines zweiten Freiraumes (19) durch Auswerten des zumindest einen Kamerabildes hinsichtlich eines zweiten Kriteriums, wobei durch die Freiräume (18, 19) ein hindernisloser Teilbereich (13) in dem Umgebungsbereich (3) beschrieben wird,
- Bestimmen einer ersten räumlichen Begrenzung (23) des ersten Freiraumes (18) und einer zweiten räumlichen Begrenzung (24) des zweiten Freiraumes (19), wobei Werte der ersten räumlichen Begrenzung (23) und der zweiten räumlichen Begrenzung (24) innerhalb derjenigen Teilerfassungsbereiche (16) des Erfassungsbereichs (14) der zumindest einen Kamera (7) bestimmt werden, in welchen Detektionspunkte (20) eines Ultraschallsensors (6) vorhanden sind,
- Verifizieren des Hindernisses (4), falls die erste räumliche Begrenzung (23) und die zweite räumliche Begrenzung (24) voneinander höchstens um einen vorbestimmten Schwellenwert und jede der ersten und zweiten Begrenzungen (23, 24) von der Position höchstens um den vorbestimmten Schwellwert abweichen.

2. Verfahren nach Anspruch 1,
**dadurch gekennzeichnet, dass**
als der Schwellwert ein Wert zwischen 25 cm und 35 cm, insbesondere 30 cm, bestimmt wird.

3. Verfahren nach Anspruch 1 oder 2,
**dadurch gekennzeichnet, dass**
in dem zumindest einen Kamerabild ein erster mit dem Kraftfahrzeug (1) befahrbarer Bereich bestimmt wird, anhand dessen der erste Freiraum (18) bestimmt wird, und ein zweiter mit dem Kraftfahrzeug (1) befahrbarer Bereich in dem zumindest einen Kamerabild bestimmt wird, anhand dessen der zweite Freiraum (19) bestimmt wird.

4. Verfahren nach Anspruch 3,
**dadurch gekennzeichnet, dass**
als der erste mit dem Kraftfahrzeug (1) befahrbare Bereich ein Bodenbereich des Umgebungsbereiches (3) in dem zumindest einen Kamerabild erkannt wird und als die erste räumliche Begrenzung (23) eine Grenze des Bodenbereiches in dem zumindest einen Kamerabild erkannt wird.

5. Verfahren nach Anspruch 4,
**dadurch gekennzeichnet, dass**
der Bodenbereich erkannt wird, indem Objekte in dem zumindest einen Kamerabild bestimmt werden, eine jeweilige Höhe der Objekte in dem zumindest einen Kamerabild bestimmt wird und als das erste Kriterium diejenigen Objekte dem Bodenbereich zugeordnet werden, deren Höhe einen vorbestimmten Höhen-Schwellwert unterschreitet.

6. Verfahren nach einem der Ansprüche 3 bis 5,
**dadurch gekennzeichnet, dass**
als der zweite mit dem Kraftfahrzeug (1) befahrbare Bereich ein Straßenbereich des Umgebungsbereiches (3) in dem zumindest einen Kamerabild erkannt wird und als die zweite räumliche Begrenzung (24) eine Grenze des Straßenbereiches in dem zumindest einen Kamerabild erkannt wird.

7. Verfahren nach Anspruch 6,
**dadurch gekennzeichnet, dass**
zum Erkennen des Straßenbereiches das zumindest eine Kamerabild durch Einteilen des zumindest einen Kamerabildes in mehrere Kamerabildblöcke segmentiert wird, eine Intensität in jedem der Kamerabildblöcke bestimmt wird und als das zweite Kriterium die Kamerabildblöcke anhand der bestimmten Intensität als Straßenbereich klassifiziert werden.

8. Verfahren nach einem der vorhergehenden Ansprüche,
**dadurch gekennzeichnet, dass**
ein Erfassungsbereich (14, 15) der zumindest einen Kamera (7) in eine vorbestimmte Anzahl der Teilerfassungsbereiche (16, 17) eingeteilt wird, ein Vorhandensein der zwei Freiräume (18, 19) in jedem der Teilerfassungsbereiche (16, 17) überprüft wird und Werte der ersten und der zweiten Begrenzung (23, 24) für jeden der Teilerfassungsbereiche (16, 17) bestimmt werden, in welchen die zwei Freiräume (16, 17) vorhanden sind.

9. Verfahren nach einem der vorhergehenden Ansprüche,
**dadurch gekennzeichnet, dass**
anhand der Ultraschallsensordaten eine Länge des Hindernisses (4) bestimmt wird und das Hindernis (4) nur anhand der basierend auf dem zumindest einen Kamerabild bestimmten Freiräume (18, 19) verifiziert wird, falls die Länge einen vorbestimmten Längen-Schwellwert überschreitet.

10. Verfahren nach einem der vorhergehenden Ansprüche,
**dadurch gekennzeichnet, dass**
das verifizierte Hindernis (4) in eine den Umgebungsbereich (3) des Kraftfahrzeugs (1) beschreibende Umfeldkarte eingetragen wird.

11. Auswerteeinrichtung (12) für ein Fahrerassistenzsystem (2) eines Kraftfahrzeugs (1), welche dazu ausgelegt ist, ein Verfahren nach einem der vorhergehenden Ansprüche durchzuführen.

12. Fahrerassistenzsystem (2) für ein Kraftfahrzeug (1) aufweisend zumindest einen Ultraschallsensor (6) zum Erfassen von Ultraschallsensordaten aus einem Umgebungsbereich (3) des Kraftfahrzeugs (1), zumindest eine Kamera (7) zum Erfassen von Kamerabildern aus dem Umgebungsbereich (3) des Kraftfahrzeugs (1) und eine Auswerteeinrichtung (12) nach Anspruch 11.

13. Fahrerassistenzsystem (2) nach Anspruch 12,
**dadurch gekennzeichnet, dass**
das Fahrerassistenzsystem (2) dazu ausgelegt ist, eine kollisionsvermeidende Maßnahme zum Vermeiden einer Kollision des Kraftfahrzeugs (1) mit dem verifizierten Hindernis (4) durchzuführen.

## Claims

1. Method for detecting an obstacle (4) in the surrounding region (3) of a motor vehicle (1), in which the following steps are carried out by an evaluation device (12) of the motor vehicle (1):
- receiving ultrasonic sensor data from at least one ultrasonic sensor (6) of the motor vehicle (1) and at least one camera image from at least one camera (7) of the motor vehicle (1),
- detecting the obstacle (4) and determining a position of the obstacle (4) using the ultrasonic sensor data,
- verifying the obstacle (4) detected using the ultrasonic sensor data by way of the at least one camera image,
**characterized by** the steps of:
- determining a first free space (18) by evaluating the at least one camera image with respect to a first criterion and determining a second free space (19) by evaluating the at least one camera image with respect to a second criterion, wherein an obstacle-free partial region (13) in the surrounding region (3) is described by the free spaces (18, 19),
- determining a first spatial boundary (23) of the first free space (18) and a second spatial boundary (24) of the second free space (19), wherein values of the first spatial boundary (23) and of the second spatial boundary (24) are determined within those partial capturing regions (16) of the capturing region (14) of the at least one camera (7) in which detection points (20) of an ultrasonic sensor (6) are present,
- verifying the obstacle (4) if the first spatial boundary (23) and the second spatial boundary (24) deviate from one another at most by a predetermined threshold value and each of the first and second boundaries (23, 24) deviate from the position at most by the predetermined threshold value.

2. Method according to Claim 1,
**characterized in that**
a value of between 25 cm and 35 cm, in particular of 30 cm, is determined as the threshold value.

3. Method according to Claim 1 or 2,
**characterized in that**
in the at least one camera image a first region through which the motor vehicle (1) may travel is determined, on the basis of which the first free space (18) is determined, and a second region through which the motor vehicle (1) may travel is determined in the at least one camera image, on the basis of which the second free space (19) is determined.

4. Method according to Claim 3,
**characterized in that**
a ground region of the surrounding region (3) is detected in the at least one camera image as the first region through which the motor vehicle (1) may travel and a boundary of the ground region is detected in the at least one camera image as the first spatial boundary (23).

5. Method according to Claim 4,
**characterized in that**
the ground region is detected by determining objects in the at least one camera image, determining a respective height of the objects in the at least one camera image and, as the first criterion, assigning to the ground region those objects whose height falls below a predetermined height threshold value.

6. Method according to any of Claims 3 to 5,
**characterized in that**
a road region of the surrounding region (3) is detected in the at least one camera image as the second region through which the motor vehicle (1) may travel and a boundary of the road region is detected in the at least one camera image as the second spatial boundary (24).

7. Method according to Claim 6,
**characterized in that**,
for detecting the road region, the at least one camera image is segmented by dividing the at least one camera image into a plurality of camera image blocks, an intensity in each of the camera image blocks is determined and, as the second criterion, the camera image blocks are classified as a road region on the basis of the determined intensity.

8. Method according to any of the preceding claims,
**characterized in that**
a capturing region (14, 15) of the at least one camera (7) is divided into a predetermined number of the partial capturing regions (16, 17), a presence of the two free spaces (18, 19) in each of the partial capturing regions (16, 17) is checked and values of the first and second boundaries (23, 24) are determined for each of the partial capturing regions (16, 17) in which the two free spaces (16, 17) are present.

9. Method according to any of the preceding claims,
**characterized in that**,
on the basis of the ultrasonic sensor data, a length of the obstacle (4) is determined and the obstacle (4) is verified by way of the free spaces (18, 19) determined on the basis of the at least one camera image only if the length exceeds a predetermined length threshold value.

10. Method according to any of the preceding claims,
**characterized in that**
the verified obstacle (4) is entered into a vicinity map describing the surrounding region (3) of the motor vehicle (1).

11. Evaluation device (12) for a driver assistance system (2) of a motor vehicle (1), which is designed to carry out a method according to any of the preceding claims.

12. Driver assistance system (2) for a motor vehicle (1) having at least one ultrasonic sensor (6) for capturing ultrasonic sensor data from a surrounding region (3) of the motor vehicle (1), at least one camera (7) for capturing camera images from the surrounding region (3) of the motor vehicle (1) and an evaluation device (12) according to Claim 11.

13. Driver assistance system (2) according to Claim 12,
**characterized in that**
the driver assistance system (2) is designed to perform a collision-avoiding measure to avoid a collision of the motor vehicle (1) with the verified obstacle (4).

## Revendications

1. Procédé permettant d'identifier un obstacle (4) dans une zone environnante (3) d'un véhicule automobile (1), dans lequel un dispositif d'analyse (12) du véhicule automobile (1) exécute les étapes suivantes consistant à :
- recevoir des données de capteur à ultrasons d'au moins un capteur à ultrasons (6) du véhicule automobile (1) et d'au moins une image de caméra d'au moins une caméra (7) du véhicule automobile (1),
- identifier l'obstacle (4) et déterminer une position de l'obstacle (4) à l'aide des données de capteur à ultrasons,
- vérifier l'obstacle (4), identifié à l'aide des données de capteur à ultrasons, à l'aide de ladite au moins une image de caméra,
**caractérisé par** les étapes consistant à :
- déterminer un premier espace libre (18) en analysant ladite au moins une image de caméra selon un premier critère, et déterminer un deuxième espace libre (19) en analysant ladite au moins une image de caméra selon un deuxième critère, les espaces libres (18, 19) décrivant une zone partielle (13) sans obstacle dans la zone environnante (3),
- déterminer une première limitation spatiale (23) du premier espace libre (18) et une deuxième limitation spatiale (24) du deuxième espace libre (19), dans lequel les valeurs de la première limitation spatiale (23) et de la deuxième limitation spatiale (24) sont déterminées à l'intérieur de celles des zones d'acquisition partielles (16) de la zone d'acquisition (14) de ladite au moins une caméra (7) dans lesquelles des points de détection (20) d'un capteur à ultrasons (6) sont présents,
- vérifier l'obstacle (4) si la première limitation spatiale (23) et la deuxième limitation spatiale (24) diffèrent l'une de l'autre au maximum d'une valeur seuil prédéterminée, et chacune de la première et de la deuxième limitation (23, 24) diffère de la position au maximum de la valeur seuil prédéterminée.

2. Procédé selon la revendication 1, **caractérisé en ce qu'**une valeur comprise entre 25 cm et 35 cm, en particulier de 30 cm, est déterminée comme la valeur seuil.

3. Procédé selon la revendication 1 ou 2, **caractérisé en ce qu'**une première zone pouvant être parcourue par le véhicule automobile (1) est déterminée sur ladite au moins une image de caméra, à l'aide de laquelle le premier espace libre (18) est déterminé, et une deuxième zone pouvant être parcourue par le véhicule automobile (1) est déterminée sur ladite au moins une image de caméra, à l'aide de laquelle le deuxième espace libre (19) est déterminé.

4. Procédé selon la revendication 3, **caractérisé en ce qu'**une zone de sol de la zone environnante (3) est identifiée comme la première zone pouvant être parcourue par le véhicule automobile (1), dans laquelle au moins une image de caméra est identifiée, et une limite de la zone de sol est identifiée sur ladite au moins une image de caméra comme la première limitation spatiale (23) .

5. Procédé selon la revendication 4, **caractérisé en ce que** la zone de sol est identifiée en déterminant des objets sur ladite au moins une image de caméra, en déterminant une hauteur respective des objets sur ladite au moins une image de caméra, et en associant à la zone de sol comme premier critère les objets dont la hauteur est inférieure à une valeur seuil de hauteur prédéterminée.

6. Procédé selon l'une quelconque des revendications 3 à 5, **caractérisé en ce qu'**une zone de route de la zone environnante (3) est identifiée sur ladite au moins une image de caméra comme la deuxième zone pouvant être parcourue par le véhicule automobile (1), et une limite de la zone de route est identifiée sur ladite au moins une image de caméra comme la deuxième limitation spatiale.

7. Procédé selon la revendication 6, **caractérisé en ce que** pour l'identification de la zone de route, ladite au moins une image de caméra est segmentée en plusieurs blocs d'image de caméra par une division de ladite au moins une image de caméra, une intensité dans chacun des blocs d'image de caméra est déterminée, et comme deuxième critère, les blocs d'image de caméra sont classifiés à l'aide de l'intensité déterminée comme la zone de route.

8. Procédé selon l'une quelconque des revendications précédentes, **caractérisé en ce qu'**une zone d'acquisition (14, 15) de ladite au moins une caméra (7) est divisée en un nombre prédéterminé de zones d'acquisition partielles (16, 17), une présence des deux espaces libres (18, 19) dans chacune des zones d'acquisition partielles (16, 17) est contrôlée, et les valeurs de la première et de la deuxième limitation (23, 24) sont déterminées pour chacune des zones d'acquisition partielles (16, 17) dans lesquelles les deux espaces libres (16, 17) sont présents.

9. Procédé selon l'une quelconque des revendications précédentes, **caractérisé en ce qu'**une longueur de l'obstacle (4) est déterminée à l'aide des données de capteur à ultrasons, et l'obstacle (4) n'est vérifié qu'à l'aide des espaces libres (18, 19) déterminés sur la base de ladite au moins une image de caméra si la longueur dépasse une valeur seuil de longueur prédéterminée.

10. Procédé selon l'une quelconque des revendications précédentes, **caractérisé en ce que** l'obstacle vérifié (4) est inscrit sur une carte de proximité décrivant la zone environnante (3) du véhicule automobile (1).

11. Dispositif d'analyse (12) pour un système d'aide au conducteur (2) d'un véhicule automobile (1) qui est conçu pour exécuter un procédé selon l'une quelconque des revendications précédentes.

12. Système d'aide au conducteur (2) pour un véhicule automobile (1) présentant au moins un capteur à ultrasons (6) permettant d'acquérir des données de capteur à ultrasons à partir d'une zone environnante (3) du véhicule automobile (1), au moins une caméra (7) permettant d'acquérir des images de caméra à partir de la zone environnante (3) du véhicule automobile (1), et un dispositif d'analyse (12) selon la revendication 11.

13. Système d'aide au conducteur (2) selon la revendication 12, **caractérisé en ce que** le système d'aide au conducteur (2) est conçu pour effectuer une mesure anticollision afin d'éviter une collision du véhicule automobile (1) avec l'obstacle vérifié (4).
